# FASCICULE DE BREVET EUROPEEN

(11) **EP 0 723 739 B1**
(45) Date de publication et mention de la délivrance du brevet: **18.04.2001**
(21) Numéro de dépôt: 96440006.3
(22) Date de dépôt: 19.01.1996
(51) Int. Cl.: A01D 34/66

(54) **Machine de coupe avec dispositif de commande de l'action d'un ressort d'allégement du mécanisme de coupe**
Mähmaschine mit einer Betätigungsvorrichtung einer Entlastungsfeder des Mähmechanismus
Cutting machine with a device to control the action of a lightening spring of the cutting mechanism

(30) Priorité: 27.01.1995 FR 9501142
(43) Date de publication de la demande: 31.07.1996
(73) Titulaire: KUHN S.A., 67700 Saverne (FR)
(72) Inventeur: Wolff, Michel, F-67670 Waltenheim sur Zorn (FR)

(56) Documents cités:
- EP-A- 0 451 074
- FR-A- 2 437 767
- FR-A- 2 584 889
- FR-A- 2 675 980
- GB-A- 2 022 382
- NL-A- 7 115 956

## Description

La présente invention se rapporte à une machine de coupe comportant :
- un mécanisme de coupe s'étendant, durant le travail, transversalement à la direction de travail,
- une structure d'attelage destinée à être liée à un véhicule moteur,
- une poutre-support articulée d'une part à la structure d'attelage au moyen d'une première articulation d'axe dirigé vers l'avant et d'autre part au mécanisme de coupe au moyen d'une deuxième articulation d'axe également dirigé vers l'avant,
et
- un organe de traction comportant au moins un ressort de traction destiné, durant le travail, à alléger le mécanisme de coupe, et un dispositif de commande destiné à annuler l'action dudit (desdits) ressort(s) de traction lors de la dépose, ledit dispositif de commande comportant, entre autres, une tige à l'une des extrémités de laquelle est (sont) lié(s) le (les) ressort(s) de traction.

Une telle machine de coupe est connue par le document FR-A-2 675 980.

Le dispositif de commande - du type mécanique - de cette machine de coupe connue comporte un corps articulé à la structure d'attelage au moyen d'une liaison pivot d'axe dirigé vers l'avant lorsque la machine de coupe est en position de travail. La tige, à l'une des extrémités de laquelle est lié le ressort de traction destiné à alléger le mécanisme de coupe, est guidée en translation dans ledit corps de sorte à pouvoir coulisser au moins sensiblement parallèlement à l'axe longitudinal dudit ressort de traction. Cette tige présente un épaulement avec lequel peut collaborer une butée escamotable. Cette butée escamotable est réalisée sous forme d'un ressort à lame dont l'une des extrémités est fixée sur le corps et dont l'autre extrémité a une forme de fourche et est destinée à être interposée entre le corps et l'épaulement de la tige pour limiter la sortie de la tige du corps.

Une commande à distance est prévue entre la butée escamotable et une béquille destinée à maintenir la poutre-support dans une position de dépose lorsque la machine de coupe est detelée du véhicule moteur. Cette béquille est articulée à la poutre-support pour pouvoir être mise en place lorsqu'elle doit supporter la poutre-support, ou au contraire, être escamotée lors du transport et du travail.

Ainsi, en pivotant la béquille en position de dépose, la commande à distance, constituée par un câble et une gaine, dégage la butée escamotable et permet à la tige de sortir davantage du corps ce qui a pour effet d'annuler la tension dans le ressort de traction.

En pivotant la béquille dans sa position escamotée, la commande à distance n'agit plus sur la butée escamotable. Celle-ci peut à nouveau s'engager entre l'épaulement de la tige et le corps dès que la tige est suffisamment rentrée dans le corps lors du pivotement du mécanisme de coupe dans sa position verticale de transport. Ce faisant, le ressort de traction pourra à nouveau alléger le mécanisme de coupe quand ce dernier sera pivoté en position horizontale de travail.

Ce dispositif de commande connu fonctionne bien lorsque l'utilisateur respecte la chronologie des différentes opérations à effectuer pour transposer la machine de coupe de la position de transport dans la position de dépose. Au préalable, l'utilisateur doit en effet pivoter la béquille en position de dépose pour dégager la butée escamotable via la commande à distance. Cette manoeuvre est parfaitement possible puisqu'en position de transport l'épaulement de la tige n'est pas en contact avec la butée escamotable. Si, par contre, l'utilisateur ne fait pas cette opération avant de pivoter le mécanisme de coupe en position horizontale, il ne pourra plus dégager la butée escamotable car la tension exercée par le ressort de traction sur la tige, plaque l'épaulement de la tige trop fortement contre la butée escamotable. La machine de coupe ne peut alors pas être déposée sans risques, sauf à recommencer toutes les opérations depuis le début.

Le but de la présente invention est, par conséquent, de remédier à cet inconvénient.

A cet effet, la machine de coupe selon la présente invention est caractérisée en ce que le dispositif de commande comporte un cylindre comprenant la tige, un corps, un piston solidaire de ladite tige et partageant le corps en deux chambres, et un circuit de fluide comportant un moyen permettant l'entrée de fluide dans la première chambre située du côté du (des) ressort(s) de traction lorsque ce(s) dernier(s) doit (doivent) être tendu(s), et la sortie de fluide de ladite première chambre lorsque le (les) ressort(s) de traction doit (doivent) être détendu(s).

Avec un tel dispositif de commande, le (les) ressort(s) de traction peut (peuvent) être détendu(s) sans qu'il soit nécessaire, pour cela, de respecter une chronologie dans les différentes opérations de passage de la position de transport dans la position de dépose. Il suffit en effet simplement de laisser sortir du fluide de la première chambre du cylindre, cette opération étant faisable que le (les) ressort(s) de traction soit (soient) détendu(s) (mécanisme de coupe en position verticale) ou tendu(s) (mécanisme de coupe en position horizontale).

La dépose de la machine de coupe selon la présente invention est donc substantiellement simplifiée et peut se faire sans risques.

Il pourra, du reste, être prévu que le moyen permettant l'entrée de fluide dans la première chambre, respectivement la sortie de fluide de ladite première chambre, comporte un organe freinant ladite sortie de fluide. Grâce à cette caractéristique, il est possible de détendre très progressivement le (les) ressort(s) de traction. Cet organe frein pourra avantageusement comprendre au moins un étranglement.

Ledit moyen permettant l'entrée de fluide dans la première chambre, respectivement la sortie de fluide de celle-ci pourra, par ailleurs, comporter un robinet.

Au cas où ledit moyen comporte un organe freinant la sortie de fluide de la première chambre, ce robinet pourra d'ailleurs être avantageusement monté en série avec ledit organe frein. Mais ce robinet pourra également, dans ce cas, être constitué d'un distributeur qui interdit toute entrée de fluide dans la première chambre, respectivement toute sortie de fluide de celle-ci lorsqu'il se trouve dans une première position, et qui rend opérationnel l'organe frein lorsqu'il se trouve dans une deuxième position. Ledit organe frein pourra d'ailleurs être avantageusement intégré dans ledit distributeur.

Il pourra également être prévu une commande à distance destinée à actionner ledit robinet. Cette commande à distance actionnera de préférence l'ouverture du robinet, tandis qu'il pourra être prévu un dispositif de rappel automatique destiné à placer et à maintenir ledit robinet dans sa position fermée. Ce dispositif de rappel automatique sera d'ailleurs de préférence intégré dans ledit robinet.

Le moyen permettant l'entrée de fluide dans la première chambre, respectivement la sortie de fluide de celle-ci, pourra, en outre, comporter un clapet anti-retour qui autorise l'entrée de fluide dans la première chambre, mais qui en interdit la sortie.

Ce clapet anti-retour et l'organe freinant la sortie de fluide de la première chambre pourront être intégrés dans un distributeur, ledit clapet anti-retour étant opérationnel lorsque le distributeur se trouvera dans une première position et ledit organe étant opérationnel lorsque ledit distributeur se trouvera dans une deuxième position.

Là aussi, il pourra être prévu une commande à distance destinée à actionner ledit distributeur. De préférence, cette commande à distance sera destinée à placer le distributeur dans sa deuxième position, tandis qu'il pourra être prévu un dispositif de rappel automatique destiné à placer et à maintenir ledit distributeur dans sa première position. Ce dispositif de rappel automatique sera, là aussi, de préférence intégré dans ledit distributeur.

Avantageusement, ledit clapet anti-retour sera monté en parallèle avec ledit robinet ou avec ledit robinet monté en série avec ledit organe frein. Ce clapet anti-retour pourra même être intégré dans le piston.

Dans une famille de réalisations de dispositifs de commande, il pourra être prévu que la tige traverse les deux chambres du corps du cylindre de sorte que celles-ci présentent des sections transversales au moins sensiblement égales. Dans ce cas, le circuit de fluide raccordé au cylindre pourra avantageusement être un circuit fermé.

Mais dans une autre famille de réalisations de dispositifs de commande, il pourra être prévu que la tige traverse uniquement la première chambre du corps du cylindre et que le circuit de fluide raccordé au cylindre comporte un réservoir.

La machine de coupe selon la présente invention pourra, en sus, comporter un organe de dépose lié à la poutre-support et destiné à maintenir celle-ci dans une position de dépose, lorsque la machine de coupe sera dételée du véhicule moteur, cet organe de dépose étant mis dans une position escamotée lorsque la machine de coupe sera liée au véhicule moteur.

Au cas où il est prévu une commande à distance destinée à actionner le robinet ou le distributeur à clapet anti-retour et à organe frein du dispositif de commande, cette commande à distance pourra être avantageusement liée à l'organe de dépose, de telle manière que la mise de l'organe de dépose dans la position de dépose actionne l'ouverture dudit robinet, respectivement place ledit distributeur dans sa deuxième position.

Il pourra également être prévu que le corps du cylindre du dispositif de commande soit lié à la structure d'attelage au moyen d'une liaison, de préférence du type pivot d'axe au moins sensiblement parallèle à l'axe de la première articulation.

Il pourra, en outre, être prévu un moyen de réarmement du dispositif de commande. De préférence, ce moyen de réarmement réarmera automatiquement le dispositif de commande quand ladite machine de coupe est transposée de la position de dépose dans la position de transport. Ce moyen de réarmement pourra comporter, au niveau de la liaison du (des) ressort(s) de traction au mécanisme de coupe, un coulisseau susceptible de coulisser au moins sensiblement parallèlement à l'axe longitudinal du (des) ressort(s) de traction. Ce coulisseau sera muni d'une première butée destinée à limiter la sortie du coulisseau, et d'une deuxième butée destinée à limiter la rentrée dudit coulisseau.

Il pourra également être prévu un moyen de réglage de l'intensité de l'allégement procuré par le (les) ressort(s) de traction. Ce moyen de réglage de l'intensité de l'allégement pourra comporter, au niveau de la liaison du (des) ressort(s) de traction au mécanisme de coupe, un coulisseau susceptible de coulisser au moins sensiblement parallèlement à l'axe longitudinal du (des) ressort(s) de traction. Ce coulisseau sera muni d'une première butée destinée à limiter la sortie du coulisseau, et d'une deuxième butée réglable destinée à limiter la rentrée plus ou moins importante dudit coulisseau.

Le moyen de réarmement du dispositif de commande et le moyen de réglage de l'intensité de l'allégement pourront d'ailleurs être constitués par un seul et même moyen.

D'autres objets et caractéristiques de l'invention ressortiront de la description ci-après avec référence aux dessins annexés qui représentent, à titre d'exemples non limitatifs, quelques formes de réalisation de la machine de coupe selon l'invention.

Sur ces dessins :
- La figure 1 représente, en position de travail, une machine de coupe selon l'invention vue de l'arrière dans le sens d'avance au travail et liée à un véhicule moteur ;
- La figure 2 est une vue de dessus de la machine de coupe représentée sur la figure 1 ;
- La figure 3 représente, en position de transport, la machine de coupe des figures 1 et 2, vue de l'arrière dans le sens d'avance ;
- La figure 4 représente, en position de dépose, la machine de coupe des figures 1 à 3, vue de l'arrière (dans le sens d'avance qu'a la machine de coupe au travail) ;
- La figure 5 représente, d'une manière schématique, une première forme de réalisation d'un dispositif de commande destiné à équiper la machine de coupe selon l'invention, ledit dispositif de commande étant actif;
- La figure 6 représente le dispositif de commande de la figure 5 se trouvant en position inactive ;
- La figure 7 représente, d'une manière schématique, une deuxième forme de réalisation d'un dispositif de commande destiné à équiper la machine de coupe selon l'invention, ledit dispositif de commande étant actif;
- La figure 8 représente, d'une manière schématique, une troisième forme de réalisation d'un dispositif de commande destiné à équiper la machine de coupe selon l'invention, ledit dispositif de commande étant actif ;
- La figure 9 représente, d'une manière schématique, une quatrième forme de réalisation d'un dispositif de commande destiné à équiper la machine de coupe selon l'invention, ledit dispositif de commande étant actif;
- La figure 10 représente, d'une manière schématique, une cinquième forme de réalisation d'un dispositif de commande destiné à équiper la machine de coupe selon l'invention, ledit dispositif de commande étant actif.

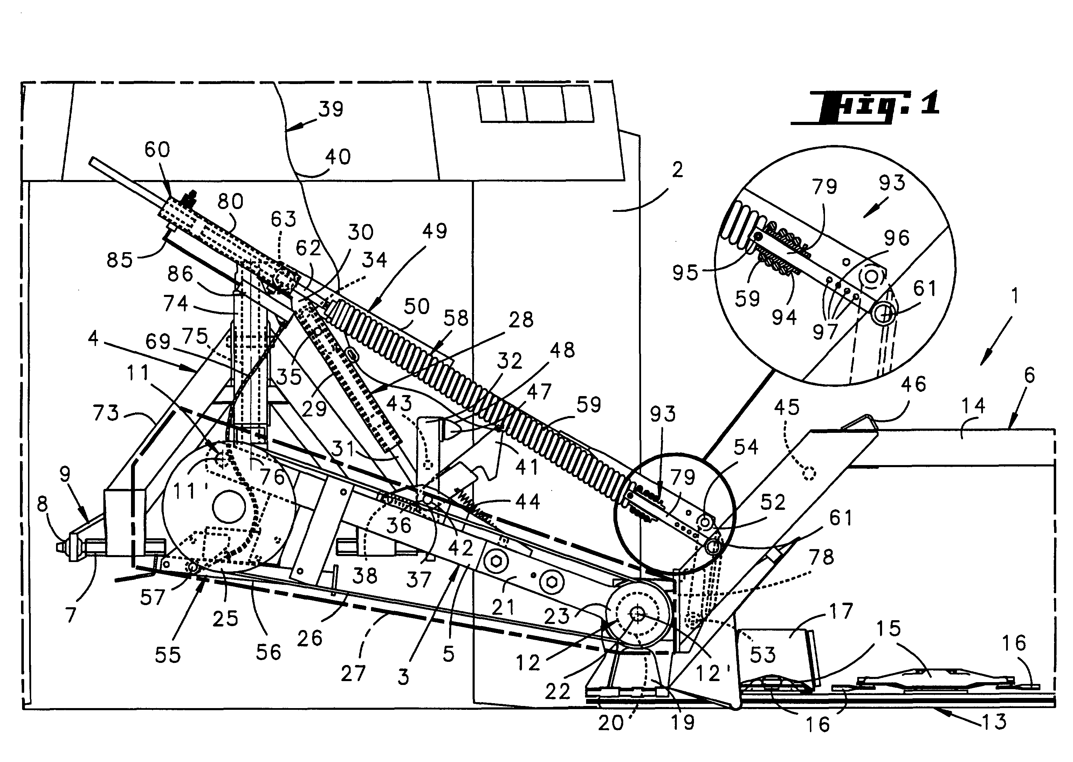

Les figures 1 à 6 représentent une machine de coupe selon l'invention réalisée, dans l'exemple représenté, sous forme d'une faucheuse (1) attelée à un véhicule moteur (2).

Cette faucheuse (1) se compose principalement d'un châssis (3) comportant une structure d'attelage (4) et une poutre-support (5), et d'un mécanisme de coupe (6).

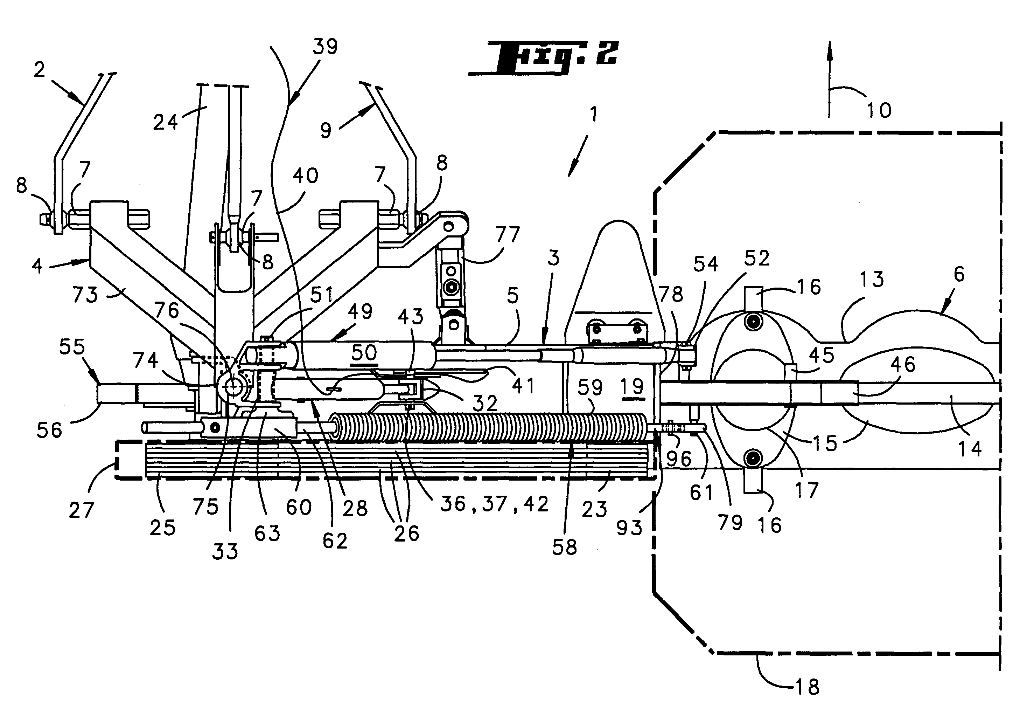

La structure d'attelage (4) est munie, à sa partie frontale, de trois points d'attelage (7) destinés à être liés aux trois points d'attelage (8) du dispositif de relevage (9) du véhicule moteur (2). La poutre-support (5), quant à elle, s'étend, lors du travail, transversalement à la direction de travail (10) (figure 2). A l'une de ses extrémités longitudinales, la poutre-support (5) est articulée à la structure d'attelage (4) au moyen d'une première articulation (11) d'axe géométrique (11') dirigé vers l'avant, s'étendant, en vue suivant la direction d'avance (10) au travail, au moins sensiblement dans le voisinage du centre du triangle défini par les trois points d'attelage (7) de la structure d'attelage (4). A son autre extrémité longitudinale, la poutre-support (5) du châssis (3) est articulée à une extrémité longitudinale du mécanisme de coupe (6) au moyen d'une deuxième articulation (12) d'axe géométrique (12') au moins sensiblement parallèle à l'axe géométrique (11') de la première articulation (11). Grâce à un tel châssis, le mécanisme de coupe (6) peut, lors du travail, s'étendre à côté de la voie du véhicule moteur (2) et s'adapter aisément au relief du sol.

Le mécanisme de coupe (6) comporte une barre de coupe (13) surmontée d'une structure porteuse (14). Comme représenté sur les figures 1 à 4, la barre de coupe (13) est équipée d'une pluralité de disques (15) munis à leur périphérie d'outils de coupe (16). Au travail, ces disques (15) tournent autour d'axes géométriques dirigés vers le haut. De plus, d'une manière connue de l'homme de l'art, les disques (15) qui s'étendent chacun à une extrémité longitudinale de la barre de coupe (13), sont surmontés d'un tambour (17) respectif tournant autour du même axe géométrique que le disque (15) qu'il surmonte. Ces deux tambours (17) calibrent l'andain de produit coupé par les outils de coupe (16).

La structure porteuse (14) qui surmonte la barre de coupe (13), est notamment destinée à supporter des organes de protection (18) (représentés en traits mixtes sur la figure 2). Cette structure porteuse (14) est notamment fixée à la barre de coupe (13) au moyen d'un carter de renvoi (19). Celui-ci remplit une double fonction : il lie d'une part le mécanisme de coupe (6) à la poutre-support (5) et il contient d'autre part une partie des organes d'entraînement entraînant les disques (15) et les tambours (17) de la barre de coupe (13). Le carter de renvoi (19) est en effet muni de deux portées cylindriques (20) matérialisant la deuxième articulation (12) et susceptibles de tourner dans les ailes d'une chape (21) solidaire de la poutre-support (5). Ces portées cylindriques (20) sont, d'une manière connue de l'homme de l'art, réalisées sous forme de paliers dans lesquels est guidé en rotation un arbre d'entrée (22) dont l'axe de rotation est confondu avec l'axe géométrique (12') de la deuxième articulation (12) et qui est en liaison d'entraînement avec les organes d'entraînement contenus dans le carter de renvoi (19). A l'arrière, l'arbre d'entrée (22) s'étend au-dehors du carter de renvoi (19) et est lié en rotation avec une première poulie (23). Cette première poulie (23) fait partie des organes de transmission de la faucheuse (1) qui transmettent le mouvement depuis la prise de force (non représentée) du véhicule moteur (2) jusqu'à l'arbre d'entrée (22) du carter de renvoi (19). Ces organes de transmission comportent par ailleurs un arbre de transmission (24) à joints universels (figure 2), une deuxième poulie (25) et des courroies (26). L'arbre de transmission (24) est accouplé à la deuxième poulie (25) guidée en rotation dans la poutre-support (5) autour d'un axe de rotation dirigé au moins sensiblement suivant la direction d'avance (10) au travail lorsque la faucheuse (1) est en position de fauchage (figures 1 et 2). La transmission du mouvement de la deuxième poulie (25) à la première poulie (23) est assurée par les courroies (26) qui s'enroulent sur lesdites poulies (23, 25). Un capot de protection (27) (représenté en traits mixtes) entoure au moins partiellement les poulies (23, 25) et les courroies (26).

Comme visible sur les figures 1 à 4, le châssis (3) de la faucheuse (1) est aussi muni d'un organe de verrouillage (28) destiné, lorsque cela est souhaité, à verrouiller le pivotement relatif de la poutre-support (5) par rapport à la structure d'attelage (4) autour de l'axe géométrique (11') de la première articulation (11). Cet organe de verrouillage (28) est constitué d'un limiteur (29) comportant un tube (30) et une tringle (31), et d'un verrou (32). Ce tube (30) est lié, à l'une de ses extrémités longitudinales, à la partie supérieure de la structure d'attelage (4) au moyen d'un tourillon (33) d'axe géométrique au moins sensiblement parallèle à l'axe géométrique (11') de la première articulation (11). A l'intérieur de ce tube (30) coulisse une partie de la tringle (31) munie d'un trou oblong (34) d'axe longitudinal au moins sensiblement confondu avec l'axe longitudinal dudit tube (30). Un axe (35), fixé au tube (30), traverse le trou oblong (34) de part en part et limite ainsi la translation de la tringle (31) dans le tube (30). L'extrémité longitudinale de la tringle (31), qui s'étend à l'extérieur du tube (30), est liée à la partie médiane de la poutre-support (5) à l'aide d'un tourillon (36) d'axe géométrique également au moins sensiblement parallèle à l'axe géométrique (11') de la première articulation (11). Ainsi, le limiteur (29) limite le pivotement de la poutre-support (5) par rapport à la structure d'attelage (4) autour de l'axe géométrique (11') de la première articulation (11) et, par là même, le déplacement vers le bas de la deuxième articulation (12) qui lie le mécanisme de coupe (6) à la poutre-support (5). L'utilisateur peut donc, en bout de champ par exemple, simplement actionner le dispositif de relevage (9) du véhicule moteur (2) pour soulever quelque peu le mécanisme de coupe (6) qui reste au moins sensiblement horizontal. Cette position de la faucheuse (1) est communément appelée "position andain".

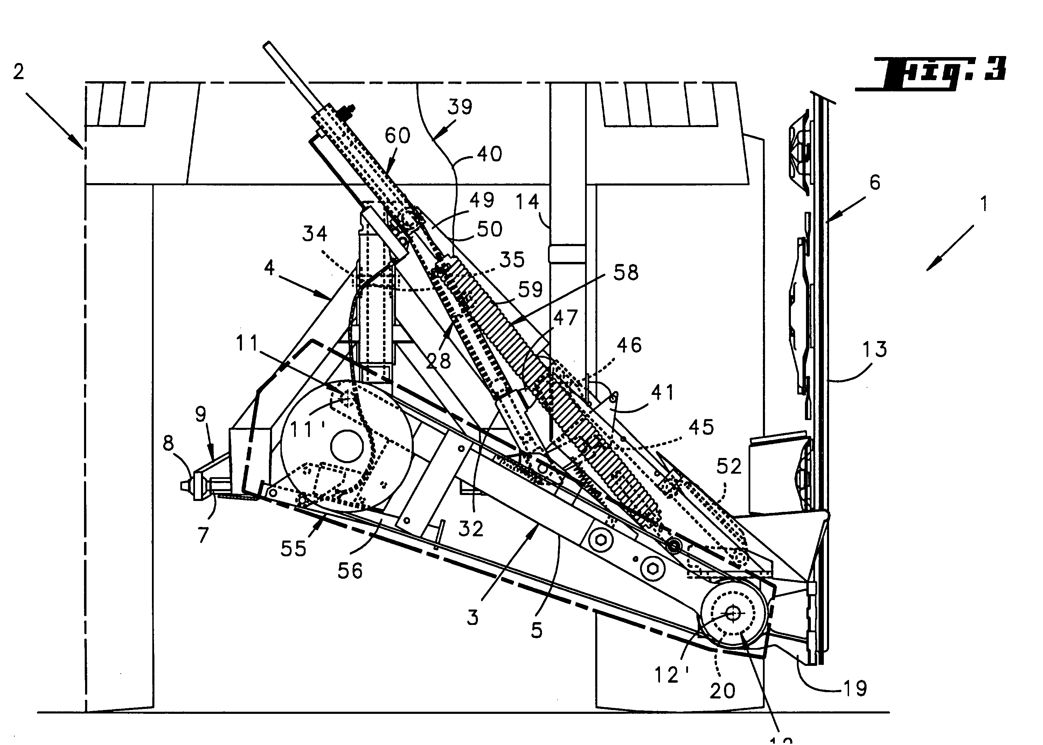

Lorsque le limiteur (29) est allongé au maximum, il peut être verrouillé au moyen du verrou (32). A cet effet, le verrou (32) est articulé sur la poutre-support (5) au moyen d'un tourillon (37) d'axe géométrique au moins sensiblement confondu avec l'axe géométrique du tourillon (36) liant la tringle (31) du limiteur (29) à ladite poutre-support (5). De cette sorte, ledit verrou (32) peut être pivoté autour dudit axe géométrique d'une position déverrouillée dans laquelle la tringle (31) peut coulisser à l'intérieur du tube (30) dans une position verrouillée dans laquelle le verrou (32) coiffe la partie de la tringle (31) qui s'étend à l'extérieur du tube (30) (figure 3). Dans cette dernière position, le verrou (32) empêche toute translation de la tringle (31) à l'intérieur du tube (30) ; l'organe de verrouillage (28) est donc verrouillé.

La mise du verrou (32) en position déverrouillée est réalisée par un ressort (38). Celui-ci est implanté entre la poutre-support (5) et le verrou (32). A l'inverse, une commande à distance (39) permet à l'utilisateur d'amener et de maintenir, au moins provisoirement, le verrou (32) en position verrouillée. Comme représenté sur les figures 1 à 4, la commande à distance (39) est constituée d'une cordelette (40) destinée à être manipulée par l'utilisateur à partir du véhicule moteur (2) et liée à un loquet (41) susceptible de pivoter le verrou (32) dans sa position verrouillée. En effet, le verrou (32) comporte un axe (43) par l'intermédiaire duquel le loquet (41) pivote ledit verrou (32) dans sa position verrouillée lorsque l'utilisateur tire sur la cordelette (40). A cet effet, le loquet (41) est articulé à la poutre-support (5) à l'aide d'un tourillon (42) d'axe géométrique au moins sensiblement confondu avec l'axe géométrique du tourillon (37) du verrou (32). L'utilisateur peut donc, lorsque la faucheuse (1) est en position andain, verrouiller le limiteur (29) en tirant sur la cordelette (40).

Dès que l'utilisateur cesse de tirer sur la cordelette (40), le loquet (41) pivote à nouveau vers sa position initiale sous l'action d'un ressort (44) lié à la poutre-support (5). Ce loquet (41) permet, en sus, de verrouiller le mécanisme de coupe (6) lorsque celui-ci est amené dans une position relevée de transport (figure 3) par pivotement autour de l'axe géométrique (12') de la deuxième articulation (12). En effet, comme visible sur la figure 3, la structure porteuse (14) du mécanisme de coupe (6) comporte un organe d'accrochage (45) auquel le loquet (41) s'accroche lorsque la cordelette (40) est détendue. Il est ainsi aisément possible de verrouiller le mécanisme de coupe (6) dans sa position relevée de transport. Le déverrouillage du mécanisme de coupe (6) s'effectue en pivotant le loquet (41) à l'encontre du ressort (44) par l'intermédiaire de la cordelette (40).

Sur la figure 3, on voit également que le maintien du verrou (32) dans sa position verrouillée est assuré par un organe de maintien (46). Celui-ci est fixé à la structure porteuse (14) du mécanisme de coupe (6) et maintient le verrou (32) dans sa position verrouillée lorsque le mécanisme de coupe (6) est en position relevée. De ce fait, dès que le mécanisme de coupe (6) est relevé, l'organe de verrouillage (28) est verrouillé, ce qui empêche le pivotement de la poutre-support (5) par rapport à la structure d'attelage (4) autour de l'axe géométrique (11') de la première articulation (11).

En outre, le verrou (32) de l'organe de verrouillage (28) est muni d'un organe élastiquement déformable (47) qui est réalisé sous la forme d'une butée en caoutchouc (48). A la fin de la mise en position de transport du mécanisme de coupe (6), l'organe de maintien (46) dudit mécanisme de coupe (6) comprime quelque peu cette butée (48) de telle sorte que celle-ci soit capable, lors du déplacement du mécanisme de coupe (6) de la position de transport vers la position andain, d'initialiser ce mouvement.

A l'inverse, le passage du mécanisme de coupe (6) de la position andain, où il s'étend au moins sensiblement horizontalement au-dessus du sol, dans la position relevée de transport est réalisé au moyen d'un organe de manoeuvre (49). Dans cet exemple de réalisation, cet organe de manoeuvre (49) est constitué d'un vérin hydraulique simple effet (50). Ce vérin hydraulique (50) est lié, à l'une de ses extrémités longitudinales, à la structure d'attelage (4) au moyen d'un tourillon (51) (figure 2) et, à l'autre de ses extrémités longitudinales, à la structure porteuse (14) du mécanisme de coupe (6) par l'intermédiaire d'un levier pivotant (52). Celui-ci est lié à la structure porteuse (14) du mécanisme de coupe (6) par un premier axe (53) et au vérin hydraulique (50) par un deuxième axe (54). Du reste, le tourillon (51) liant le vérin hydraulique (50) à la structure d'attelage (4) et le tourillon (33) liant le tube (30) de l'organe de verrouillage (28) à ladite structure d'attelage (4) sont au moins sensiblement coaxiaux, voire réalisés en une seule pièce.

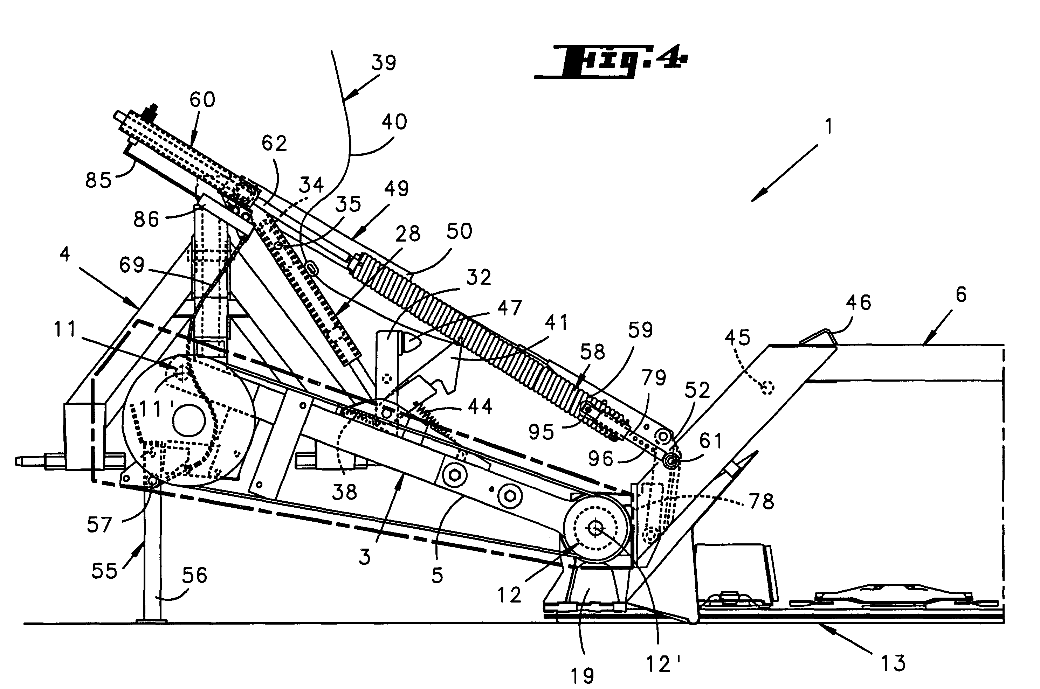

Lors de la dépose de la faucheuse (1) (figure 4), le mécanisme de coupe (6) repose longitudinalement sur le sol et la poutre-support (5) est supportée par un organe de dépose (55). Dans cet exemple de réalisation, l'organe de dépose (55) est une béquille (56) liée à la poutre-support (5) dans le voisinage de la première articulation (11) à l'aide d'un tourillon (57) d'axe géométrique au moins sensiblement parallèle à l'axe géométrique (11') de la première articulation (11). De ce fait, la béquille (56) peut, en vue du transport, être pivotée d'une position de dépose dans laquelle la béquille (56) est destinée à supporter la poutre-support (5) (figure 4), dans une position de transport et de travail dans laquelle la béquille (56) est escamotée (figures 1 à 3).

Sur la figure 4 qui montre la faucheuse (1) en position de dépose, on voit également que l'organe de verrouillage (28) est déverrouillé, c'est-à-dire qu'il est possible, dans cette position, de pivoter la structure d'attelage (4) par rapport à la poutre-support (5) autour de l'axe géométrique (11') de la première articulation (11). Un tel agencement facilite considérablement l'attelage de la faucheuse (1) aux trois points (8) du dispositif de relevage (9) du véhicule moteur (2).

La faucheuse (1) comporte également un organe de traction (58) destiné, durant le travail, à alléger le mécanisme de coupe (6). Cet organe de traction (58) agit entre la structure d'attelage (4) et le mécanisme de coupe (6) et se compose principalement d'un ressort de traction (59) et d'un dispositif de commande (60).

Ce ressort de traction (59) est lié d'une part à un coulisseau (79) lui-même lié au mécanisme de coupe (6) au moyen d'une articulation (61) d'axe géométrique au moins sensiblement parallèle à l'axe géométrique (12') de la deuxième articulation (12), et d'autre part à une tige (62) du dispositif de commande (60), d'axe longitudinal au moins sensiblement confondu avec l'axe longitudinal dudit ressort de traction (59).

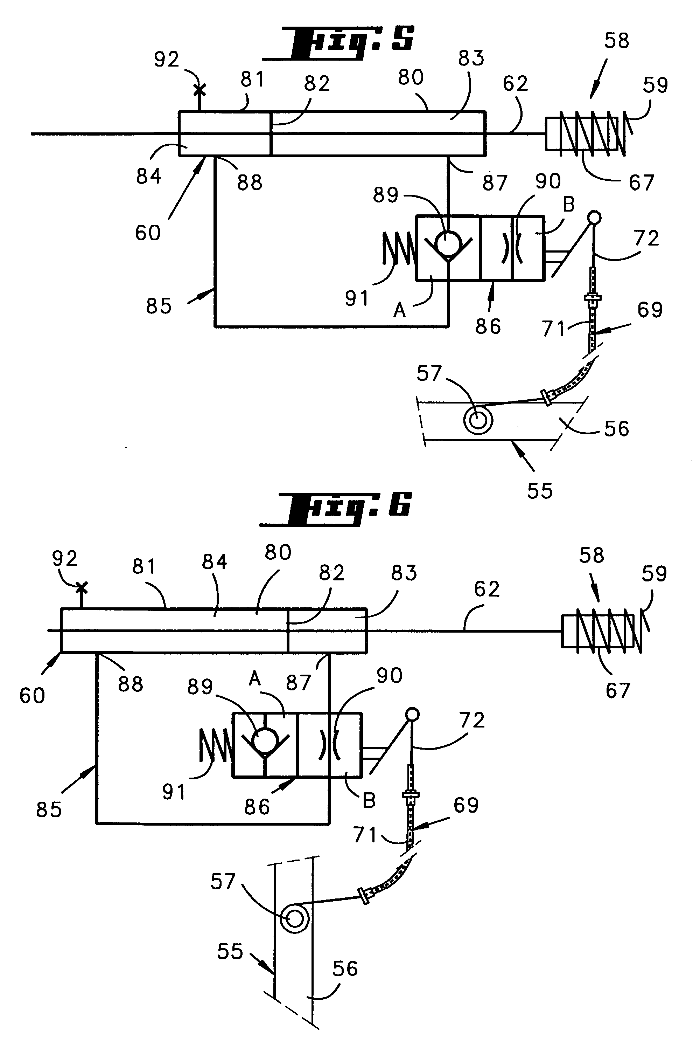

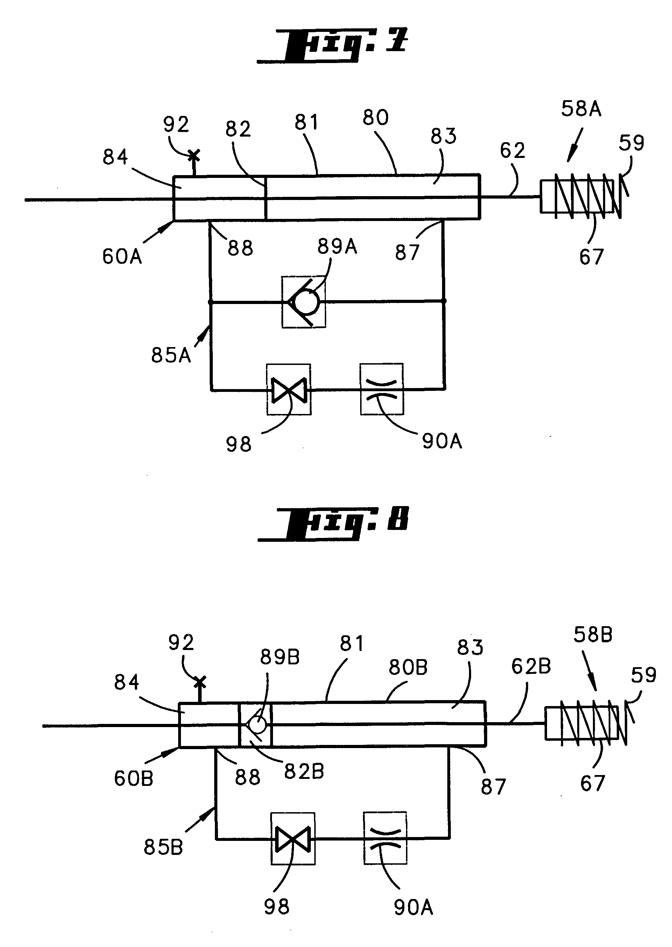

Le dispositif de commande (60), quant à lui, est articulé à la structure d'attelage (4) à l'aide d'une liaison pivot (63) d'axe géométrique au moins sensiblement parallèle à l'axe géométrique (11') de la première articulation (11). Dans cette réalisation, cette liaison pivot (63) liant le dispositif de commande (60) à la structure d'attelage (4) et le tourillon (51) liant le vérin hydraulique (50) à ladite structure d'attelage (4) sont au moins sensiblement coaxiaux. Ce dispositif de commande (60) permet d'annuler l'action du ressort de traction (59) lors de la dépose. A cet effet, comme visible sur la figure 5, le dispositif de commande (60) comporte un cylindre hydraulique (80) qui comprend un corps (81) lié à la structure d'attelage (4) au moyen de la liaison pivot (63) décrite ci-avant, et la tige (62) réalisée sous forme de tige double s'étendant à travers le corps (81) et vissée, à l'une de ses extrémités, dans un élément de liaison (67) solidaire du ressort de traction (59). Un piston (82), solidaire de la tige (62), divise le corps (81) du cylindre hydraulique (80) en deux chambres (83, 84) de section transversale au moins sensiblement égale : une première chambre (83) située du côté de l'extrémité de la tige (62) liée au ressort de traction (59) et une deuxième chambre (84) située du côté de l'extrémité libre de la tige (62). La tige (62) à piston (82) du cylindre hydraulique (80) est destinée à occuper deux positions :
- une position de travail dans laquelle le ressort de traction (59) est tendu et allège le mécanisme de coupe (6) (figure 5),
- une position de dépose dans laquelle le ressort de traction (59) est détendu (figure 6).

A cet effet, le dispositif de commande (60) comporte un circuit hydraulique fermé (85) reliant les deux chambres (83, 84) du cylindre hydraulique (80). Ce circuit hydraulique (85) comporte un distributeur (86) lié d'une part à un orifice (87) de la première chambre (83) et d'autre part à un orifice (88) de la deuxième chambre (84).

Le distributeur (86) peut être mis dans deux positions (A ; B) : une première position (A) autorisant uniquement le transfert du fluide de la deuxième chambre (84) dans la première chambre (83) au moyen d'un clapet anti-retour (89) (figure 5), et une deuxième position (B) permettant la circulation du fluide entre les deux chambres (83, 84) au travers d'un étranglement (90) (figure 6). Ce distributeur (86) comporte également un dispositif de rappel automatique (91) maintenant, au repos, ledit distributeur (86) dans la première position (A). La mise du distributeur (86) dans la deuxième position (B) est réalisée directement à partir de l'organe de dépose (55) qui agit sur le dispositif de commande (60) au moyen d'une commande à distance (69). Ainsi, lorsque la béquille (56) dudit organe de dépose (55) se trouve dans sa position escamotée (travail), le ressort de traction (59) peut alléger le mécanisme de coupe (6) et, inversement, lorsque la béquille (56) se trouve dans sa position de dépose, l'action du ressort de traction (59) est annulée. Dans l'exemple de réalisation, la commande à distance (69) du dispositif de commande (60) comporte une gaine (71) à l'intérieur de laquelle peut être translaté un câble (72) lié d'une part à la béquille (56) et d'autre part au distributeur (86) du dispositif de commande (60). De ce fait, dès que la béquille (56) est déplacée de sa position escamotée vers sa position de dépose, ou vice versa, cela a pour effet de translater le câble (72) dans la gaine (71) et de permettre la mise du distributeur (86) dans sa deuxième position (B), respectivement dans sa première position (A).

On remarquera par ailleurs que le circuit hydraulique fermé (85) est doté d'un orifice de remplissage (92) situé sur le cylindre hydraulique (80) et débouchant dans la deuxième chambre (84). Cet orifice (92) permet le remplissage du circuit hydraulique fermé (85), puis est obturé une fois que ledit circuit hydraulique (85) est complètement rempli.

L'organe de traction (58) comporte également un moyen de réglage (93) permettant de régler la valeur de l'allégement du mécanisme de coupe (6). Ce moyen de réglage (93) s'étend à l'extrémité du ressort de traction (59) où celui-ci est lié au mécanisme de coupe (6). Il comporte le coulisseau (79) déjà évoqué précédemment, ainsi qu'un deuxième élément de liaison (94) solidaire du ressort de traction (59) et dans lequel est guidé le coulisseau (79) de sorte à pouvoir coulisser au moins sensiblement suivant l'axe longitudinal du ressort de traction (59). Le coulisseau (79) comporte une première butée (95) prévue à l'extrémité dudit coulisseau (79) s'étendant à l'intérieur du ressort de traction (59), laquelle première butée (95) est destinée à venir en contact avec la face intérieure du deuxième élément de liaison (94) située à l'intérieur du ressort de traction (59), lorsque la faucheuse (1) est en position de travail. Le coulisseau (79) comporte également une deuxième butée (96) s'étendant à l'extérieur du ressort de traction (59) entre la face extérieure du deuxième élément de liaison (94) et l'articulation (61) liant le coulisseau (79) au mécanisme de coupe (6). Cette deuxième butée (96) est composée d'une goupille engagée dans l'un quelconque de plusieurs trous (97) prévus dans le coulisseau (79). Cette goupille (96) est destinée à venir buter sur la face extérieure du deuxième élément de liaison (94) lors de la mise en position de transport de la faucheuse (1). Les différents trous (97) peuvent chacun recevoir la goupille (96) en fonction de l'intensité de l'allégement du mécanisme de coupe (6) souhaitée.

On peut encore voir que la structure d'attelage (4) de la faucheuse (1) est constituée d'un cadre (73) supportant les trois points d'attelage (7), et d'un dispositif de liaison (74) liant ledit cadre (73) à la première articulation (11). Ce dispositif de liaison (74) comporte un tourillon (75) lié à son extrémité inférieure à la première articulation (11) et guidé dans le cadre (73) de la structure d'attelage (4) autour d'un axe géométrique (76) au moins sensiblement vertical. En outre, à l'extrémité supérieure du tourillon (75) du dispositif de liaison (74) sont fixés le dispositif de commande (60) de l'organe de traction (58), le tube (30) de l'organe de verrouillage (28) et une extrémité longitudinale du vérin hydraulique (50). Grâce à un tel agencement, le mécanisme de coupe (6) et la poutre-support (5) peuvent pivoter conjointement, vers l'arrière, autour de l'axe géométrique (76) du dispositif de liaison (74) lorsque le mécanisme de coupe (6) heurte, durant le travail, un obstacle qu'il ne peut pas franchir. A cet effet, il est prévu, entre la poutre-support (5) et le cadre (73) de la structure d'attelage (4), un dispositif à déclenchement (77) qui maintient le mécanisme de coupe (6) et la poutre-support (5) dans la position normale de travail et qui autorise par contre le pivotement du mécanisme de coupe (6) et de la poutre-support (5) autour de l'axe géométrique (76) du dispositif de liaison (74) lorsque ledit mécanisme de coupe (6) rencontre un tel obstacle.

La faucheuse (1) des figures 1 à 6 qui vient d'être décrite fonctionne de la manière suivante.

La faucheuse (1) est liée aux trois points d'attelage (8) du dispositif de relevage (9) du véhicule moteur (2) par l'intermédiaire de sa structure d'attelage (4), et l'arbre de transmission (24) à joints universels est accouplé à la prise de force (non représentée) dudit véhicule moteur (2).

Au travail, le mécanisme de coupe (6) s'étend dans sa position de travail, telle que représentée sur les figures 1 et 2. Le véhicule moteur (2) déplace la faucheuse (1) dans le sens d'avance (10) au travail et sa prise de force entraîne en rotation les disques (15) par l'intermédiaire des organes de transmission (arbre de transmission (24) à joints universels, deuxième poulie (25), courroies (26), première poulie (23)), de l'arbre d'entrée (22) et des divers organes d'entraînement (non représentés) logés dans le carter de renvoi (19) et des divers organes d'entraînement (non représentés) logés dans la barre de coupe (13).

En tournant, les outils de coupe (16) des disques (15) coupent le produit à récolter qui se trouve dans la zone de coupe et les tambours (17) calibrent l'andain de produit coupé déposé derrière le mécanisme de coupe (6).

Etant donné que la poutre-support (5) peut pivoter quelque peu autour de l'axe géométrique (11') de la première articulation (11) et que le mécanisme de coupe (6) peut pivoter autour de l'axe géométrique (12') de la deuxième articulation (12) par rapport à la poutre-support (5), ledit mécanisme de coupe (6) peut bien s'adapter au relief du terrain. Le ressort de traction (59) qui est tendu, étant donné que le distributeur (86), et plus précisément le clapet anti-retour (89) de celui-ci, maintient la tige (62) à piston (82) du cylindre hydraulique (80) du dispositif de commande (60) dans la position représentée sur la figure 5, réduit la force avec laquelle le mécanisme de coupe (6) repose sur le sol.

Lorsque l'on désire transporter la faucheuse (1), on stoppe l'entraînement en rotation des disques (15).

Ensuite pour placer la faucheuse (1) en position de transport (figure 3), on lève tout d'abord le dispositif de relevage (9) du véhicule moteur (2). Ceci a pour effet de lever la faucheuse (1) lorsque le pivotement de la poutre-support (5), vers le bas, autour de l'axe géométrique (11') de la première articulation (11) est stoppé par le limiteur (29) de l'organe de verrouillage (28) et que le levier pivotant (52) bute contre le carter de renvoi (19) qui comporte une face d'appui (78) prévue à cet effet. Dans cette position intermédiaire dite "position andain" (non représentée) où le mécanisme de coupe (6) s'étend au moins sensiblement horizontalement au-dessus du sol, on agit ensuite sur la cordelette (40), ce qui fait pivoter le loquet (41) en position déverrouillée. Ce faisant, le loquet (41) entraîne le verrou (32) en position verrouillée de transport. Tout en maintenant l'action sur la cordelette (40), on pivote alors le mécanisme de coupe (6) autour de l'axe géométrique (12') de la deuxième articulation (12) au moyen de l'organe de manoeuvre (49) (vérin hydraulique (50)). Lorsque le mécanisme de coupe (6) est dans sa position relevée de transport, on relâche l'action sur la cordelette (40) pour permettre au loquet (41) de s'accrocher à l'organe d'accrochage (45) du mécanisme de coupe (6) sous l'action du ressort (44). Par ailleurs, l'organe de maintien (46) du mécanisme de coupe (6) comprime l'organe élastiquement déformable (47) (butée caoutchouc (48)) et maintient le verrou (32) en position verrouillée. Le transport peut ainsi être fait dans de bonnes conditions puisque le mécanisme de coupe (6) est immobilisé par rapport à la structure d'attelage (4).

On notera que lors du pivotement du mécanisme de coupe (6) autour de l'axe géométrique (12') de la deuxième articulation (12), le coulisseau (79) coulisse dans le deuxième élément de liaison (94) vers l'intérieur du ressort de traction (59). La tige (62) du cylindre hydraulique (80), quant à elle, ne se déplace pas dans le corps (81) du cylindre hydraulique (80) lors dudit pivotement.

Inversement, lorsque l'utilisateur souhaite déplacer la faucheuse (1) de la position de transport dans la position de travail, il tire sur la cordelette (40), ce qui escamote le loquet (41) et permet au mécanisme de coupe (6) de pivoter autour de l'axe géométrique (12') de la deuxième articulation (12) dès que le fluide contenu dans le vérin hydraulique (50) peut retourner au véhicule moteur (2). Ce faisant, le mécanisme de coupe (6) pivote vers sa position andain sous l'action de son poids (le pivotement est initialisé par la butée caoutchouc (48)) tout en étant freiné par l'écoulement du fluide du vérin hydraulique (50) vers le véhicule moteur (2).

Dès que le mécanisme de coupe (6) a pivoté d'un certain angle, l'utilisateur peut relâcher l'action sur la cordelette (40). Ceci a pour effet de ramener, au moins sensiblement simultanément, le loquet (41) dans sa position initiale sous l'action du ressort (44) et le verrou (32) en position déverrouillée sous l'action du ressort (38). Le pivotement du mécanisme de coupe (6) vers le bas est stoppé lorsque le vérin hydraulique (50) est dans sa position d'allongement maximal.

Lors du pivotement du mécanisme de coupe (6) vers le bas, le coulisseau (79) coulisse dans le deuxième élément de liaison (94), vers l'extérieur, jusqu'à ce que la première butée (95) vienne en appui sur la face intérieure dudit deuxième élément de liaison (94), ce qui a pour effet de tendre le ressort de traction (59) et d'alléger le mécanisme de coupe (6). En abaissant ensuite le dispositif de relevage (9) du véhicule moteur (2), on amène le mécanisme de coupe (6) en contact avec le sol. On continue néanmoins d'abaisser le dispositif de relevage (9) jusqu'à ce que le limiteur (29) soit à mi-course (c'est-à-dire que l'axe (35) soit sensiblement au milieu du trou oblong (34) de la tringle (31) du limiteur (29)) et que le levier pivotant (52) soit décollé de la face d'appui (78) du carter de renvoi (19).

Pour déposer la faucheuse (1), l'utilisateur peut d'abord amener le mécanisme de coupe (6) au niveau du sol et placer ensuite l'organe de dépose (55) dans sa position de dépose ou, inversement, mettre d'abord l'organe de dépose (55) dans sa position de dépose et amener ensuite le mécanisme de coupe (6) au niveau du sol.

Dans le premier cas, la commande à distance (69) qui lie l'organe de dépose (55) au dispositif de commande (60), place le distributeur (86) dans la deuxième position (B) (figure 6). Sous l'action du ressort de traction (59), du fluide contenu dans la première chambre (83) est transvasé dans la deuxième chambre (84) au travers de l'étranglement (90). Ce faisant, la tige (62) sort du corps (81) du cylindre hydraulique (80) et le ressort de traction (59) se détend, on notera que cette détente du ressort de traction (59) est progressive étant donné que le transvasement de fluide de la première chambre (83) dans la deuxième chambre (84) est freiné par l'étranglement (90).

En abaissant alors totalement le dispositif de relevage (9) du véhicule moteur (2), on fait reposer le mécanisme de coupe (6) sur le sol (à moins que celui-ci y repose déjà) et on fait pivoter la poutre-support (5) autour de l'axe géométrique (12') de la deuxième articulation (12). Le pivotement de la poutre-support (5) est stoppé lorsque la béquille (56) arrive en contact avec le sol. Dans cette position, il est avantageux que l'axe (35) du limiteur (29) soit au moins sensiblement au milieu du trou oblong (34) de la tringle (31) et que le levier pivotant (52) soit décollé de la face d'appui (78) du carter de renvoi (19). La faucheuse (1) repose alors longitudinalement sur le sol par l'intermédiaire du mécanisme de coupe (6) et de la béquille (56). Elle peut alors être aisément dételée du véhicule moteur (2).

Dans le cas où l'utilisateur met d'abord l'organe de dépose (55) dans sa position de dépose et amène ensuite le mécanisme de coupe (6) au niveau du sol, du fluide contenu dans la première chambre (83) est transvasé dans la deuxième chambre (84) au travers de l'étranglement (90) durant le pivotement du mécanisme de coupe (6), vers le bas, autour de l'axe géométrique (12') de la deuxième articulation (12).

Lorsque la faucheuse (1) est déposée, tel que représenté sur la figure 4, le ressort de traction (59) est complètement détendu et le coulisseau (79) peut coulisser dans le deuxième élément de liaison (94). Du reste, dans cette position, la structure d'attelage (4) peut pivoter par rapport à la poutre-support (5) autour de l'axe géométrique (11') de la première articulation (11) dans la plage autorisée par le limiteur (29). Une telle disposition facilite le dételage de la faucheuse (1) du véhicule moteur (2) et l'attelage ultérieur de la faucheuse (1) au véhicule moteur (2).

Pour amener la faucheuse (1) de sa position de dépose dans sa position de transport, on fera les différentes opérations en sens inverse. C'est-à-dire que l'on commence par lier les trois points d'attelage (7) de la structure d'attelage (4) aux trois points d'attelage (8) du dispositif de relevage (9) du véhicule moteur (2) en pivotant, si nécessaire, la structure d'attelage (4) autour de l'axe géométrique (11') de la première articulation (11), et on accouple l'arbre de transmission (24) à joints universels à la prise de force (non représentée) du véhicule moteur (2). Puis on lève le dispositif de relevage (9) du véhicule moteur (2) ce qui a pour effet de lever la faucheuse (1). L'utilisateur tire ensuite sur la cordelette (40) pour verrouiller le limiteur (29). Tout en maintenant cette action, il alimente l'organe de manoeuvre (49) (vérin hydraulique (50)) de sorte à relever le mécanisme de coupe (6) dans sa position de transport. Dès que le mécanisme de coupe (6) est dans sa position relevée de transport, l'utilisateur relâche l'action sur la cordelette (40) pour permettre au loquet (41) de s'accrocher à l'organe d'accrochage (45) du mécanisme de coupe (6) sous l'action du ressort (44).

Durant le relevage du mécanisme de coupe (6), le coulisseau (79) coulisse tout d'abord dans le deuxième élément de liaison (94) vers l'intérieur du ressort de traction (59) jusqu'à ce que la deuxième butée (96) vienne en appui sur la face extérieure du deuxième élément de liaison (94). A partir de ce moment, le ressort de traction (59) qui est comprimé, fait pénétrer la tige (62) dans le corps (81) du cylindre hydraulique (80), ce qui a pour effet de transvaser du fluide de la deuxième chambre (84) dans la première chambre (83) au travers de l'étranglement (90).

Il ne reste alors plus qu'à escamoter l'organe de dépose (55) ce qui, par l'intermédiaire de la commande à distance (69) et du dispositif de rappel automatique (91), place le distributeur (86) dans la première position (A). Le clapet anti-retour (89) empêche alors la sortie du fluide contenu dans la première chambre (83). Le cylindre hydraulique (80) est bloqué dans cette position. Le dispositif de commande (60) est à nouveau armé et le ressort de traction (59) sera tendu lorsque le mécanisme de coupe (6) sera pivoté en position de travail et il pourra alors à nouveau remplir sa fonction d'allégement du mécanisme de coupe (6).

On notera que l'organe de dépose (55) peut également être escamoté avant de relever le mécanisme de coupe (6). Ainsi, du fluide contenu dans la deuxième chambre (84) sera transvasé dans la première chambre (83) au travers du clapet anti-retour (89) durant le relevage du mécanisme de coupe (6).

Le réglage de l'intensité de l'allégement du mécanisme de coupe (6) s'effectue en déplaçant la goupille (96) de la deuxième butée le long de l'axe longitudinal du coulisseau (79), c'est-à-dire en engageant celle-ci dans l'un quelconque des trous (97) prévus à cet effet dans le coulisseau (79). Ainsi, en éloignant la goupille (96) de l'articulation (61), la tige (62) rentrera davantage dans le corps (81) du cylindre hydraulique (80) lors du pivotement du mécanisme de coupe (6) dans la position de transport.

Un volume de fluide plus important sera transvasé de la deuxième chambre (84) dans la première chambre (83). Lors de la mise du mécanisme de coupe (6) dans la position de travail, le ressort de traction (59) sera tendu davantage et procurera donc un allégement accru du mécanisme de coupe (6).

Inversement, lorsqu'on rapproche la goupille (96) de l'articulation (61), la tige (62) rentrera moins loin dans le corps (81). Lors de la mise du mécanisme de coupe (6) en position de travail, le ressort de traction (59) sera alors moins tendu et procurera un allégement moindre du mécanisme de coupe (6).

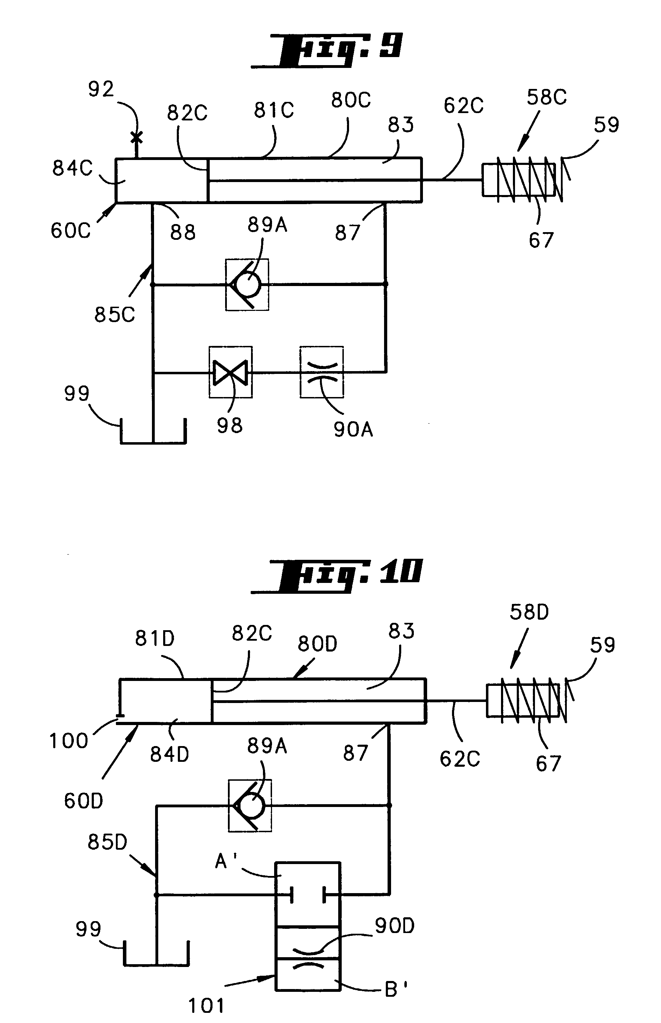

La figure 7 montre, d'une manière schématique, un deuxième exemple de réalisation d'un dispositif de commande selon la présente idée inventive. Ce dispositif de commande (60A) destiné à équiper la machine de coupe telle que décrite ci-avant, comporte un certain nombre d'éléments qui ont été décrits précédemment. Ces éléments garderont par conséquent le même numéro de repère et ne seront pas redécrits. Il comporte également un certain nombre d'éléments qui sont comparables à des éléments du dispositif de commande (60). Ces éléments seront affectés du même numéro de repère que ces éléments comparables du dispositif de commande (60) suivi de la lettre A. Ils ne seront décrits que si cela s'avère nécessaire.

Le dispositif de commande (60A) de l'organe de traction (58A), représenté sur la figure 7, est, dans l'ensemble, semblable au dispositif de commande (60). Il comporte un circuit hydraulique fermé (85A) permettant de mettre en communication les deux chambres (83, 84) du cylindre hydraulique (80), soit au travers d'un clapet anti-retour (89A), soit au travers d'un robinet (98) et d'un étranglement (90A) montés en série.

En fait, le cylindre hydraulique (80) est branché en parallèle avec d'une part le clapet anti-retour (89A) et d'autre part le robinet et l'étranglement (90A).

Le fonctionnement du dispositif de commande (60A) est sensiblement identique au fonctionnement du dispositif de commande (60).

En effet, lorsque le ressort de traction (59) doit être détendu, c'est-à-dire que le dispositif de commande (60A) doit être rendu inactif, on ouvre le robinet (98) et du fluide contenu dans la première chambre (83) est alors transvasé dans la deuxième chambre (84) au travers de l'étranglement (90A) et du robinet (98).

Inversement, lorsque le dispositif de commande (60A) doit être réarmé, du fluide contenu dans la deuxième chambre (84) sera transvasé dans la première chambre (83) soit au travers du clapet anti-retour (89A) si le robinet (98) est déjà fermé ou, si ce dernier est encore ouvert, éventuellement également au travers du robinet (98) et de l'étranglement (90A), durant le relevage du mécanisme de coupe (6).

La figure 8 montre, d'une manière schématique, un troisième exemple de réalisation d'un dispositif de commande selon la présente idée inventive. Ce dispositif de commande (60B), destiné à équiper la machine de coupe telle que décrite ci-avant, comporte un certain nombre d'éléments qui ont été décrits précédemment. Ces éléments garderont par conséquent le même numéro de repère et ne seront pas redécrits. Il comporte également un certain nombre d'éléments qui sont comparables à des éléments des dispositifs de commande (60 ; 60A). Ces éléments seront affectés du même numéro de repère que ces éléments comparables des disde commande (60 ; 60A) suivi de la lettre B. Ils ne seront décrits que si cela s'avère nécessaire.

Le dispositif de commande (60B) de l'organe de traction (58B), représenté sur la figure 8 est, dans l'ensemble, tout à fait semblable au dispositif de commande (60A). La seule différence réside dans le fait que le clapet anti-retour (89B) est intégré dans le piston (82B) de la tige (62B) du cylindre hydraulique (80B) et que le circuit hydraulique fermé (85B) comporte un robinet (98) et un étranglement (90A) montés en série entre l'orifice (87) de la première chambre (83) et l'orifice (88) de la deuxième chambre (84).

Ainsi, lorsque le ressort de traction (59) doit être détendu, c'est-à-dire que le dispositif de commande (60B) doit être rendu inactif, on ouvre le robinet (98) et du fluide contenu dans la première chambre (83) est alors transvasé dans la deuxième chambre (84) au travers de l'étranglement (90A) et du robinet (98).

Inversement, lorsque le dispositif de commande (60B) doit être réarmé, du fluide contenu dans la deuxième chambre (84) sera transvasé dans la première chambre (83), soit au travers du clapet anti-retour (89B) si le robinet (98) est déjà fermé, ou si ce dernier est encore ouvert, éventuellement également au travers du robinet (98) et de l'étranglement (90A), durant le relevage du mécanisme de coupe (6).

La figure 9 montre, d'une manière schématique, un quatrième exemple de réalisation d'un dispositif de commande selon la présente idée inventive. Ce dispositif de commande (60C) destiné à équiper la machine de coupe telle que décrite ci-avant, comporte un certain nombre d'éléments qui ont été décrits précédemment. Ces éléments garderont par conséquent le même numéro de repère et ne seront pas redécrits. Il comporte également un certain nombre d'éléments qui sont comparables à des éléments du dispositif de commande (60A). Ces éléments seront affectés du même numéro de répère que ces éléments comparables du dispositif de commande (60A) suivi de la lettre C. Ils ne seront décrits que si cela s'avère nécessaire.

Le dispositif de commande (60C) de l'organe de traction (58C), représenté sur la figure 9 est, dans l'ensemble, semblable au dispositif de commande (60A). La différence réside dans le fait que la tige (62C) du cylindre hydraulique (80C) ne traverse pas la deuxième chambre (84C) du corps (81C). De ce fait, la section transversale de la deuxième chambre (84C) est plus grande que la section transversale de la première chambre (83). Pour compenser la différence de volume lors du transvasement de fluide de l'une des chambres dans l'autre chambre, le circuit hydraulique (85C) comporte en sus un réservoir (99) de fluide.

Lorsque le ressort de traction (59) doit être détendu, on ouvre le robinet (98) et du fluide contenu dans la première chambre (83) est alors transvasé dans la deuxième chambre (84C) au travers de l'étranglement (90A) et du robinet (98) et une certaine quantité de fluide est aspirée dans le réservoir (99).

Inversement, lorsque le dispositif de commande (60C) doit être réarmé, du fluide contenu dans la deuxième chambre (84C) sera transvasé dans la première chambre (83) soit au travers du clapet anti-retour (89A) si le robinet (98) est déjà fermé, ou, si ce dernier est encore ouvert, éventuellement également au travers du robinet (98) et de l'étranglement (90A), et le surplus de fluide retournera au réservoir (99).

La figure 10 montre, d'une manière schématique, un cinquième exemple de réalisation d'un dispositif de commande selon la présente idée inventive. Ce dispositif de commande (60D) destiné à équiper la machine de coupe telle que décrite ci-avant, comporte un certain nombre d'éléments qui ont été décrits précédemment. Ces éléments garderont par conséquent le même numéro de repère et ne seront pas redécrits. Il comporte également un certain nombre d'éléments qui sont comparables à des éléments des dispositifs de commande précédents. Ces éléments seront affectés du même numéro de repère que ces éléments comparables des dispositifs de commande précédents suivi de la lettre D. Ils ne seront décrits que si cela s'avère nécessaire.

Le dispositif de commande (60D) de l'organe de traction (58D) représenté sur la figure 10, comporte un cylindre hydraulique (80D) du type simple effet avec la première chambre (83), de son corps (81D) traversé par la tige de vérin (62C), laquelle première chambre (83) est reliée au circuit hydraulique (85D) par son orifice (87). La deuxième chambre (84D), quant à elle, comporte un orifice (100) faisant communiquer la deuxième chambre (84D) avec l'air libre. Le circuit hydraulique (85D) comporte un clapet anti-retour (89A) monté en parallèle avec un distributeur (101). Ce distributeur (101) peut être mis dans deux positions (A', B') : une première position (A') interdisant toute entrée et toute sortie de fluide de la première chambre (83), et une deuxième position (B') autorisant l'entrée et la sortie de fluide de la première chambre (83) au travers d'un étranglement (90D). Ce distributeur (101) est donc un robinet avec un étranglement intégré.

Ainsi, lorsque le ressort de traction (59) doit être détendu, on place le distributeur (101) en deuxième position (B') et du fluide contenu dans la première chambre (83) est alors transvasé dans le réservoir (99) au travers de l'étranglement (90D).

Inversement, lorsque le dispositif de commande (60D) doit être réarmé, du fluide contenu dans le réservoir (99) sera transvasé dans la première chambre (83), soit au travers du clapet anti-retour (89A) si le distributeur (101) est déjà fermé (première position A'), ou si ce dernier est encore ouvert (deuxième position B'), éventuellement également au travers de l'étranglement (90D).

Lorsque le robinet (98 ; 101) est fermé, on notera que, dans les dispositifs de commande (60A; 60B ; 60C ; 60D), ce robinet (98 ; 101) et le clapet anti-retour (89A ; 89B) montés en parallèle empêchent la sortie du fluide contenu dans la première chambre (83), malgré la force de traction exercée par le ressort de traction (59) sur la tige (62 ; 62B ; 62C) du cylindre hydraulique (80 ; 80B ; 80C ; 80D).

Finalement, différentes modifications restent possibles, notamment en ce qui concerne la constitution des divers éléments ou par substitution d'équivalents techniques, sans pour autant sortir du domaine de protection défini dans les revendications.

C'est ainsi qu'il est parfaitement possible de réaliser des dispositifs de commande à partir de divers éléments des différents exemples de réalisation de dispositifs de commande décrits ci-dessus.

Il est bien évidemment parfaitement possible que le robinet (98 ; 101) puisse être actionné par une commande à distance du type de la commande à distance (69), de sorte que lorsque la béquille (56) dudit organe de dépose (55) se trouve dans sa position escamotée (mécanisme de coupe (6) en position de travail), le ressort de traction (59) puisse alléger ledit mécanisme de coupe (6), et inversement, lorsque la béquille (56) se trouve dans sa position de dépose, l'action du ressort de traction (59) soit annulée.

Il est également possible d'équiper le robinet (98 ; 101) d'un dispositif de rappel automatique comparable au dispositif de rappel automatique (91) du distributeur (86), qui ferme le robinet (98 ; 101) lorsque la béquille (56) est escamotée.

Si aucune commande à distance n'est prévue, l'utilisateur devra manoeuvrer manuellement le distributeur (86) ou le robinet (98 ; 101) séparément de la béquille (56).

Il est également parfaitement possible d'équiper la machine de coupe d'un organe de traction (58) composé de deux ou plusieurs ressorts de traction (59).

Dans des formes de réalisation simplifiées, le distributeur (86) et les circuits hydrauliques (85A ; 85B ; 85C ; 85D) pourraient être dépourvus de clapet anti-retour (89 ; 89A).

Dans de tels cas, l'utilisateur devra rendre le distributeur ou le robinet passant avant de relever le mécanisme de coupe (6) de la position de dépose dans la position de transport, puis fermer ledit distributeur ou ledit robinet avant de commencer le travail.

Il peut également être prévu d'autres moyens de réglage de la valeur de l'allégement du mécanisme de coupe (6). Il est par exemple possible d'agir sur le distributeur (86) ou sur le robinet (98; 101) pour faire sortir quelque peu la tige (62 ; 62B ; 62C) du corps (81 ; 81C ; 81D), ce qui permet de réduire l'effort de traction dans le ressort de traction (59) et, par conséquent, la valeur de l'allégement dudit mécanisme de coupe (6).

Il est aussi parfaitement concevable que les dispositifs de commande puissent être du type pneumatique.

On comprendra enfin que l'invention peut s'appliquer à des machines de coupe différentes de la faucheuse (1) représentée sur les diverses figures.

## Revendications

1. Machine de coupe comportant :
- un mécanisme de coupe (6) s'étendant, durant le travail, transversalement à la direction de travail (10),
- une structure d'attelage (4) destinée à être liée à un véhicule moteur (2),
- une poutre-support (5) articulée d'une part à la structure d'attelage (4) au moyen d'une première articulation (11) d'axe (11') dirigé vers l'avant et d'autre part au mécanisme de coupe (6) au moyen d'une deuxième articulation (12) d'axe (12') également dirigé vers l'avant,
et
- un organe de traction (58 ; 58A ; 58B ; 58C ; 58D) comportant au moins un ressort de traction (59) destiné, durant le travail, à alléger le mécanisme de coupe (6), et un dispositif de commande (60 ; 60A ; 60B ; 60C ; 60D) destiné à annuler l'action dudit (desdits) ressort(s) de traction (59) lors de la dépose, ledit dispositif de commande (60 ; 60A ; 60B ; 60C ; 60D) comportant, entre autres, une tige (62 ; 62B ; 62C) à l'une des extrémités de laquelle est (sont) lié(s) le (les) ressort(s) de traction (59),
***caractérisée en ce*** que le dispositif de commande (60 ; 60A ; 60B ; 60C ; 60D) comporte :
- un cylindre (80 ; 80B ; 80C ; 80D) comprenant la tige (62 ; 62B ; 62C),
- un corps (81 ; 81C ; 81D),
- un piston (82 ; 82B; 82C) solidaire de ladite tige (62 ; 62B ; 62C) et partageant le corps (81 ; 81C ; 81D) en deux chambres (83, 84 ; 83, 84C ; 83, 84D), et ;
- un circuit de fluide (85 ; 85A ; 85B ; 85C ; 85D) comportant un moyen (86 ; 89A, 90A, 98 ; 89B, 90A, 98 ; 89A, 101) permettant l'entrée de fluide dans la première chambre (83) située du côté du (des) ressort(s) de traction (59) lorsque ce(s) dernier(s) doit (doivent) être tendu(s), et la sortie de fluide de ladite première chambre (83) lorsque le (les) ressorts(s) de traction (59) doit (doivent) être détendu(s).

2. Machine de coupe selon la revendication 1, ***caractérisée en ce*** que ledit moyen comporte un organe (90 ; 90A ; 90D) freinant la sortie de fluide de la première chambre (83).

3. Machine de coupe selon la revendication 2, ***caractérisée en ce*** que l'organe freinant la sortie de fluide de la première chambre (83) comprend au moins un étranglement (90 ; 90A ; 90D).

4. Machine de coupe selon l'une quelconque des revendications 1 à 3, ***caractérisée en ce*** que ledit moyen comporte un robinet (98 ; 101).

5. Machine de coupe selon la revendication 4 et la revendication 2 ou 3, ***caractérisée en ce*** que le robinet (98) est monté en série avec l'organe (90A) freinant la sortie de fluide de la première chambre (83).

6. Machine de coupe selon la revendication 4 et la revendication 2 ou 3, ***caractérisée en ce*** que ledit robinet est constitué d'un distributeur (101) qui interdit toute entrée et toute sortie de fluide de la première chambre (83) lorsqu'il se trouve dans une première position (A'), et qui rend opérationnel l'organe (90D) freinant la sortie de fluide de la première chambre (83) lorsqu'il se trouve dans une deuxième position (B').

7. Machine de coupe selon la revendication 6, ***caractérisée en ce*** que ledit organe (90D) freinant la sortie de fluide de la première chambre (83) est intégré dans ledit distributeur (101).

8. Machine de coupe selon l'une quelconque des revendications 4 à 7, ***caractérisée en ce*** qu'il est prévu une commande à distance pour actionner le robinet (98 ; 101).

9. Machine de coupe selon la revendication 8, ***caractérisée en ce*** que la commande à distance actionne l'ouverture du robinet (98 ; 101).

10. Machine de coupe selon l'une quelconque des revendications 4 à 9, ***caractérisée en ce*** qu'il est prévu un dispositif de rappel automatique destiné à placer et à maintenir le robinet (98 ; 101) dans sa position fermée, ledit dispositif de rappel automatique étant, de préférence, intégré dans ledit robinet (98 ; 101).

11. Machine de coupe selon l'une quelconque des revendications 1 à 10, ***caractérisée en ce*** que ledit moyen comporte un clapet anti-retour (89 ; 89A ; 89B) qui autorise l'entrée de fluide dans la première chambre (83), mais qui en interdit la sortie.

12. Machine de coupe selon la revendication 11 et la revendication 2 ou 3, ***caractérisée en ce*** que le clapet anti-retour (89) et l'organe (90) freinant la sortie de fluide de la première chambre (83) sont intégrés dans un distributeur (86), ledit clapet anti-retour (89) étant opérationnel lorsque le distributeur (86) se trouve dans une première position (A) et ledit organe (90) étant opérationnel lorsque le distributeur (86) se trouve dans une deuxième position (B).

13. Machine de coupe selon la revendication 12, ***caractérisée en ce*** qu'il est prévu une commande à distance (69) pour actionner le distributeur (86).

14. Machine de coupe selon la revendication 13, ***caractérisée en ce*** que la commande à distance (69) place le distributeur (86) dans sa deuxième position (B).

15. Machine de coupe selon l'une quelconque des revendications 12 à 14, ***caractérisée en ce*** qu'il est prévu un dispositif de rappel automatique (91) destiné à placer et à maintenir le distributeur (86) dans sa première position (A), ledit dispositif de rappel automatique (91) étant, de préférence, intégré dans ledit distributeur (86).

16. Machine de coupe selon la revendication 11 et l'une quelconque des revendications 4 à 10, ***caractérisée en ce*** que le clapet anti-retour (89A ; 89B) est monté en parallèle avec le robinet (98 ; 101) ou avec le robinet (98 ; 101) monté en série avec l'organe (90A ; 90D) freinant la sortie de fluide de la première chambre (83).

17. Machine de coupe selon la revendication 16, ***caractérisée en ce*** que le clapet anti-retour (89B) est intégré dans le piston (82B).

18. Machine de coupe selon l'une quelconque des revendications 1 à 17, *caracté****risée en ce*** que la tige (62 ; 62B) traverse les deux chambres (83, 84) du corps (81) du cylindre (80 ; 80B) de sorte que celles-ci présentent des sections transversales au moins sensiblement égales.

19. Machine de coupe selon la revendication 18, ***caractérisée en ce*** que le circuit de fluide (85 ; 85A ; 85B) est un circuit fermé.

20. Machine de coupe selon l'une quelconque des revendications 1 à 17, ***caractérisée en ce*** que la tige (62C) traverse uniquement la première chambre (83) du corps (81C ; 81D) du cylindre (80C ; 80D) et que le circuit de fluide (85C ; 85D) comporte un réservoir (99).

21. Machine de coupe selon l'une quelconque des revendications 1 à 20, ***caractérisée en ce*** qu'il est prévu un organe de dépose (55) lié à la poutre-support (5) et destiné à maintenir celle-ci dans une position de dépose, lorsque la machine de coupe est dételée du véhicule moteur (2), ledit organe de dépose (55) étant mis dans une position escamotée lorsque la machine de coupe est liée au véhicule moteur (2).

22. Machine de coupe selon la revendication 21 et la revendication 9 ou 14, ***caractérisée en ce*** que la commande à distance (69) est liée à l'organe de dépose (55) de telle manière que la mise de l'organe de dépose (55) dans la position de dépose actionne l'ouverture du robinet (98 ; 101), respectivement place le distributeur (86) dans sa deuxième position (B).

23. Machine de coupe selon l'une quelconque des revendications 1 à 22, ***caractérisée en ce*** que le corps (81 ; 81C; 81D) du cylindre (80 ; 80B ; 80 C ; 80D) est lié à la structure d'attelage (4) au moyen d'une liaison (63).

24. Machine de coupe selon la revendication 23, ***caractérisée en ce*** que ladite liaison (63) est du type pivot d'axe au moins sensiblement parallèle à l'axe (11') de la première articulation (11).

25. Machine de coupe selon l'une quelconque des revendications 1 à 24, ***caractérisée en ce*** qu'il est prévu un moyen (79, 94, 95, 96) de réarmement du dispositif de commande (60 ; 60A ; 60B ; 60C ; 60D).

26. Machine de coupe selon la revendication 25, ***caractérisée en ce*** que ledit moyen de réarmement (79, 94, 95, 96) réarme automatiquement le dispositif de commande (60 ; 60A ; 60 B ; 60C; 60D) quand ladite machine de coupe est transposée de la position de dépose dans la position de transport.

27. Machine de coupe selon la revendication 25 ou 26, ***caractérisée en ce*** que ledit moyen de réarmement (79, 94, 95, 96) comporte, au niveau de la liaison du (des) ressort(s) de traction (59) au mécanisme de coupe (6), un coulisseau (79) susceptible de coulisser au moins sensiblement parallèlement à l'axe longitudinal du (des) ressort(s) de traction (59) et muni d'une première butée (95) destinée à limiter la sortie du coulisseau (79), et d'une deuxième butée (96) destinée à limiter la rentrée dudit coulisseau (79).

28. Machine de coupe selon l'une quelconque des revendications 1 à 27, ***caractérisée en ce*** qu'il est prévu un moyen (79, 94, 95, 96) de réglage de l'intensité de l'allégement procuré par le (les) ressort(s) de traction (59).

29. Machine de coupe selon la revendication 28, ***caractérisée en ce*** que ledit moyen de réglage de l'intensité de l'allégement (79, 94, 95, 96) comporte, au niveau de la liaison du (des) ressort(s) de traction (59) au mécanisme de coupe (6), un coulisseau (79) susceptible de coulisser au moins sensiblement parallèlement à l'axe longitudinal du (des) ressort(s) de traction (59) et muni d'une première butée (95) destinée à limiter la sortie du coulisseau (79), et d'une deuxième butée (96) réglable destinée à limiter la rentrée plus ou moins importante dudit coulisseau (79).

## Patentansprüche

1. Schneidmaschine, die
- einen Schneidmechanismus (6), der sich im Betrieb quer zur Arbeitsrichtung (10) erstreckt,
- eine Kupplungsvorrichtung (4) zur Verbindung mit einem Motorfahrzeug (2),
- einen Träger (5), der einerseits mittels eines ersten Gelenks (11) mit einer nach vorne ausgerichteten Achse (11') mit der Kupplungsvorrichtung (4) und andererseits mittels eines zweiten Gelenks (12) mit einer ebenfalls nach vorne ausgerichteten Achse (12') mit dem Schneidmechanismus (6) verbunden ist,
und
- ein Zugelement (58; 58A; 58B; 58C; 58D) mit mindestens einer Zugfeder (59), die im Betrieb den Schneidmechanismus (6) entlasten soll, und einer Steuervorrichtung (60; 60A; 60B; 60C; 60D), die die Wirkung der Zugfeder(n) (59) beim Absetzen außer Kraft setzen soll, wobei die Steuervorrichtung (60; 60A; 60B; 60C; 60D) unter anderem eine Stange (62; 62B; 62C) enthält mit einem Ende welcher die Zugfeder(n) verbunden ist (sind),
umfaßt,
***dadurch gekennzeichnet****,* daß die Steuervorrichtung (60; 60A; 60B; 60C; 60D)
- einen die Stange (62; 62B; 62C) enthaltenden Zylinder (80; 80B; 80C; 80D),
- einen Körper (81; 81C; 81D),
- einen fest mit der Stange (62; 62B; 62C) verbundenen und den Körper (81; 81C; 81D) in zwei Kammern (83, 84; 83, 84C; 83, 84D) unterteilenden Kolben (82; 82B; 82C) und
- einen Fluidkreis (85; 85A; 85B; 85C; 85D) mit einem Mittel (86; 89A, 90A, 98; 89B, 90A, 98; 89A, 101), das den Fluideintritt in die sich auf der Seite der Zugfeder(n) (59) befindende erste Kammer (83) gestattet, wenn diese erstere(n) gespannt werden muß (müssen), und den Fluidaustritt aus der ersten Kammer (83) gestattet, wenn die Zugfeder(n) (59) entspannt werden muß (müssen),
umfaßt.

2. Schneidmaschine nach Anspruch 1, ***dadurch gekennzeichnet,*** daß das Mittel ein Element (90; 90A; 90D) aufweist, das den Fluidaustritt aus der ersten Kammer (83) bremst.

3. Schneidmaschine nach Anspruch 2, ***dadurch gekennzeichnet****,* daß das den Fluidaustritt aus der ersten Kammer (83) bremsende Element mindestens eine Drosselung (90; 90A; 90D) umfaßt.

4. Schneidmaschine nach irgend einem der Ansprüche 1 bis 3, ***dadurch gekennzeichnet****,* daß das Mittel ein Ventil (98; 101) umfaßt.

5. Schneidmaschine nach Anspruch 4 und Anspruch 2 oder 3, ***dadurch gekennzeichnet****,* daß das Ventil (98) mit dem den Fluidaustritt aus der ersten Kammer (83) bremsenden Element (90A) in Reihe geschaltet ist.

6. Schneidmaschine nach Anspruch 4 und Anspruch 2 oder 3, ***dadurch gekennzeichnet,*** daß das Ventil aus einem Verteiler (101) besteht, der jeglichen Fluideintritt und -austritt aus der ersten Kammer (83) sperrt, wenn er sich in einer ersten Stellung (A') befindet, und das das den Fluidaustritt aus der ersten Kammer (83) bremsende Element (90D) in Betrieb setzt, wenn er sich in einer zweiten Stellung (B') befindet.

7. Schneidmaschine nach Anspruch 6, ***dadurch gekennzeichnet,*** daß das den Fluidaustritt aus der ersten Kammer (83) bremsende Element (90D) in den Verteiler (101) integriert ist.

8. Schneidmaschine nach irgend einem der Ansprüche 4 bis 7, ***dadurch gekennzeichnet,*** daß eine Fernsteuerung zur Betätigung des Ventils (98; 101) vorgesehen ist.

9. Schneidmaschine nach Anspruch 8, ***dadurch gekennzeichnet,*** daß die Fernsteuerung das Öffnen des Ventils (98; 101) bewirkt.

10. Schneidmaschine nach irgend einem der Ansprüche 4 bis 9, ***dadurch gekennzeichnet,*** daß eine automatische Rückstellvorrichtung vorgesehen ist, die das Ventil (98; 101) in seine geschlossene Stellung bringen und darin halten soll und die vorzugsweise in das Ventil (98; 101) integriert ist.

11. Schneidmaschine nach irgend einem der Ansprüche 1 bis 10, ***dadurch gekennzeichnet,*** daß das Mittel eine Rückschlagklappe (89; 89A; 89B) umfaßt, die den Eintritt von Fluid in die erste Kammer (83) gestattet, aber dessen Austritt daraus sperrt.

12. Schneidmaschine nach Anspruch 11 und Anspruch 2 oder 3, ***dadurch gekennzeichnet,*** daß die Rückschlagklappe (89) und das den Fluidaustritt aus der ersten Kammer (83) bremsende Element (90) in einen Verteiler (86) integriert sind, wobei die Rückschlagklappe (89) in Betrieb ist, wenn sich der Verteiler (86) in einer ersten Stellung (A) befindet, und das Element Element (90) in Betrieb ist, wenn sich der Verteiler (86) in einer zweiten Stellung (B) befindet.

13. Schneidmaschine nach Anspruch 12, ***dadurch gekennzeichnet,*** daß eine Fernsteuerung (69) zur Betätigung des Verteilers (86) vorgesehen ist.

14. Schneidmaschine nach Anspruch 13, ***dadurch gekennzeichnet,*** daß die Fernsteuerung (69) den Verteiler (86) in seine zweite Stellung (B) positioniert.

15. Schneidmaschine nach irgend einem der Ansprüche 12 bis 14, ***dadurch gekennzeichnet,*** daß eine automatische Rückstellvorrichtung (91) vorgesehen ist, die den Verteiler (86) in seine erste Stellung (A) positionieren und darin halten soll und die vorzugsweise in den Verteiler (86) integriert ist.

16. Schneidmaschine nach Anspruch 11 und irgend einem der Ansprüche 4 bis 10, ***dadurch gekennzeichnet,*** daß die Rückschlagklappe (89A; 89B) parallel zum Ventil (98; 101) oder parallel zu dem in Reihe mit dem den Fluidaustritt aus der ersten Kammer (83) bremsenden Element (90A; 90D) geschalteten Ventil (98; 101) geschaltet ist.

17. Schneidmaschine nach Anspruch 16, ***dadurch gekennzeichnet,*** daß die Rückschlagklappe (89B) in den Kolben (82B) integriert ist.

18. Schneidmaschine nach irgend einem der Ansprüche 1 bis 17, ***dadurch gekennzeichnet,*** daß die Stange (62; 62B) die beiden Kammern (83, 84) des Körpers (81) des Zylinders (80; 80B) derart durchquert, daß sie zumindest im wesentlichen gleiche Querschnitte aufweisen.

19. Schneidmaschine nach Anspruch 18, ***dadurch gekennzeichnet,*** daß der Fluidkreis (85; 85A; 85B) ein geschlossener Kreis ist.

20. Schneidmaschine nach irgend einem der Ansprüche 1 bis 17, ***dadurch gekennzeichnet,*** daß die Stange (62C) nur die erste Kammer (83) des Körpers (81C; 81D) des Zylinders (80C; 80D) durchquert und daß der Fluidkreis (85C; 85D) einen Behälter (99) enthält.

21. Schneidmaschine nach irgend einem der Ansprüche 1 bis 20, ***dadurch gekennzeichnet,*** daß ein mit dem Träger (5) verbundenes Absetzglied (55) vorgesehen ist, das diesen in einer Absetzstellung halten soll, wenn die Schneidmaschine vom Motorfahrzeug (2) abgekuppelt ist, wobei das Absetzglied (55) in eine eingeklappte Stellung positioniert wird, wenn die Schneidmaschine mit dem Motorfahrzeug (2) verbunden ist.

22. Schneidmaschine nach Anspruch 21 und Anspruch 9 oder 14, ***dadurch gekennzeichnet,*** daß die Fernsteuerung (69) derart mit dem Absetzglied (55) verbunden ist, daß die Positionierung des Absetzglieds (55) in die Absetzstellung das Öffnen des Ventils (98; 101) bewirkt bzw. den Verteiler (86) in seine zweite Stellung (B) positioniert.

23. Schneidmaschine nach irgend einem der Ansprüche 1 bis 22, ***dadurch gekennzeichnet,*** daß der Körper (81; 81C; 81D) des Zylinders (80; 80B; 80C; 80D) mittels einer Verbindung (63) mit der Kupplungsvorrichtung (4) verbunden ist.

24. Schneidmaschine nach Anspruch 23, ***dadurch gekennzeichnet,*** daß die Verbindung (63) eine Schwenkverbindung mit einer zumindest im wesentlichen parallel zur Achse (11') des ersten Gelenks (11) verlaufenden Achse ist.

25. Schneidmaschine nach irgend einem der Ansprüche 1 bis 24, ***dadurch gekennzeichnet,*** daß ein Mittel (79, 94, 95, 96) zur Rückstellung der Steuervorrichtung (60; 60A; 60B; 60C; 60D) vorgesehen ist.

26. Schneidmaschine nach Anspruch 25, ***dadurch gekennzeichnet,*** daß das Rückstellmittel (79, 94, 95, 96) die Steuervorrichtung (60; 60A; 60B; 60C; 60D) automatisch rückstellt, wenn die Schneidmaschine aus der Absetzstellung in die Transportstellung umgestellt wird.

27. Schneidmaschine nach Anspruch 25 oder 26, ***dadurch gekennzeichnet,*** daß das Mittel (79, 94, 95, 96) zur Rückstellung im Bereich der Verbindung der Zugfeder(n) (59) mit dem Schneidmechanismus (6) ein Gleitstück (79) aufweist, das zumindest im wesentlichen parallel zur Längsachse der Zugfeder(n) (59) gleiten kann und mit einem ersten Anschlag (95), der den Austritt des Gleitstücks (79) begrenzen soll, und einem zweiten Anschlag (96), der den Wiedereintritt des Gleitstücks (79) begrenzen soll, versehen ist.

28. Schneidmaschine nach irgend einem der Ansprüche 1 bis 27, ***dadurch gekennzeichnet,*** daß ein Mittel (79, 94, 95, 96) zur Einstellung der durch die Zugfeder(n) (59) bereitgestellten Entlastungsstärke vorgesehen ist.

29. Schneidmaschine nach Anspruch 28, ***dadurch gekennzeichnet,*** daß das Mittel (79, 94, 95, 96) zur Einstellung der Entlastungsstärke im Bereich der Verbindung der Zugfeder(n) (59) mit dem Schneidmechanismus (6) einen Gleitstück (79) aufweist, der zumindest im wesentlichen parallel zur Längsachse der Zugfeder(n) (59) gleiten kann und mit einem ersten Anschlag (95), der den Austritt des Gleitstücks (79) begrenzen soll, und einem einstellbaren zweiten Anschlag (96), der den mehr oder weniger starken Wiedereintritt des Gleitstücks (79) begrenzen soll, versehen ist.

## Claims

1. Cutting machine comprising:
- a cutting mechanism (6) extending, during work, transversely to the direction of work (10),
- a hitching structure (4) intended to be connected to a motor vehicle (2),
- a support beam (5) articulated, on the one hand, to the hitching structure (4) by means of a first articulation (11), the axis (11') of which is directed forward and, on the other hand, to the cutting mechanism (6) by means of a second articulation (12), the axis (12') of which is also directed forward, and
- a traction element (58; 58A; 58B; 58C; 58D) comprising at least one draw-spring (59) intended, during work, to lighten the cutting mechanism (6), and a control device (60; 60A; 60B; 60C; 60D) intended to cancel the action of the said draw-spring(s) (59) during setting-down, the said control device (60; 60A; 60B; 60C; 60D) comprising, among other things, a rod (62; 62B; 62C) to one of the ends of which the draw-spring(s) (59) is (are) connected,
***characterized in*** that the control device (60; 60A; 60B; 60C; 60D) comprises:
- a cylinder (80; 80B; 80C; 80D) comprising the rod (62; 62B; 62C),
- a body (81; 81C; 81D),
- a piston (82; 82B; 82C) secured to the said rod (62; 62B; 62C) and splitting the body (81; 81C; 81D) into two chambers (83, 84; 83, 84C; 83, 84D), and;
- a fluid circuit (85; 85A; 85B; 85C; 85D) comprising a means (86; 89A, 90A, 98; 89B, 90A, 98; 89A, 101) allowing fluid to enter the first chamber (83) located on the same side as the draw-spring(s) (59) when the latter has (have) to be tensioned, and letting fluid out of the said first chamber (83) when the draw-spring(s) (59) has (have) to be detensioned.

2. Cutting machine according to Claim 1, ***characterized in*** that the said means comprises an element (90; 90A; 90D) slowing the outlet of fluid from the first chamber (83).

3. Cutting machine according to Claim 2, ***characterized in*** that the element slowing the outlet of fluid from the first chamber (83) comprises at least one throttle (90; 90A; 90D).

4. Cutting machine according to any one of Claims 1 to 3, ***characterized in*** that the said means comprises a tap (98; 101).

5. Cutting machine according to Claim 4 and Claim 2 or 3, ***characterized in*** that the tap (98) is mounted in series with the element (90A) slowing the outlet of fluid from the first chamber (83).

6. Cutting machine according to Claim 4 and Claim 2 or 3, ***characterized in*** that the said tap consists of a distributer (101) which prevents any fluid from entering or leaving the first chamber (83) when it is in a first position (A') and which renders operational the element (90D) slowing the outlet of fluid from the first chamber (83) when it is in a second position (B').

7. Cutting machine according to Claim 6, ***characterized in*** that the said element (90D) slowing the outlet of fluid from the first chamber (83) is integrated into the said distributer (101).

8. Cutting machine according to any one of Claims 4 to 7, ***characterized in*** that a remote control is provided for operating the tap (98; 101).

9. Cutting machine according to Claim 8, ***characterized in*** that the remote control causes the tap (98; 101) to open.

10. Cutting machine according to any one of Claims 4 to 9, ***characterized in*** that there is an automatic return device intended to place the tap (98; 101) in its closed position, and keep it there, the said automatic return device preferably being integrated into the said tap (98; 101).

11. Cutting machine according to any one of Claims 1 to 10, ***characterized in*** that the said means comprises a non-return valve (89; 89A; 89B) which allows fluid to enter the first chamber (83) but which prevents it from leaving it.

12. Cutting machine according to Claim 11 and Claim 2 or 3, ***characterized in*** that the non-return valve (89) and the element (90) slowing the outlet of fluid from the first chamber (83) are integrated into a distributer (86), the said non-return valve (89) being operational when the distributer (86) is in a first position (A) and the said element (90) being operational when the distributer (86) is in a second position (B).

13. Cutting machine according to Claim 12, ***characterized in*** that a remote control (69) is provided for operating the distributer (86).

14. Cutting machine according to Claim 13, characterized in that the remote control (69) places the distributer tap (86) into its second position (B).

15. Cutting machine according to any one of Claims 12 to 14, ***characterized in*** that an automatic return device (91) is provided, wich is intended to place the distributer (86) in its first position (A) and keep it there, the said automatic return device (91) preferably being integrated into the said distributer (86).

16. Cutting machine according to Claim 11 and any one of Claims 4 to 10, ***characterized in*** that the non-return valve (89A; 89B) is mounted in parallel with the tap (98; 101) or with the tap (98; 101) mounted in series with the element (90A; 90D) slowing the outlet of fluid from the first chamber (83).

17. Cutting machine according to Claim 16, ***characterized in*** that the non-return valve (89B) is integrated into the piston (82B).

18. Cutting machine according to any one of Claims 1 to 17, ***characterized in*** that the rod (62; 62B) passes through the two chambers (83, 84) of the body (81) of the cylinder (80; 80B) in such a way that these chambers have at least substantially equal cross sections.

19. Cutting machine according to Claim 18, ***characterized in*** that the fluid circuit (85; 85A; 85B) is a closed circuit.

20. Cutting machine according to any one of Claims 1 to 17, ***characterized in*** that the rod (62C) passes only through the first chamber (83) of the body (81C; 81D) of the cylinder (80C; 80D) and in that the fluid circuit (85C; 85D) comprises a reservoir (99).

21. Cutting machine according to any one of Claims 1 to 20, ***characterized in*** that a setting-down element (55) is provided, which is connected to the support beam (5) and intended to keep the latter in a set down position when the cutting machine is unhitched from the motor vehicle (2), the said setting-down element (55) being brought into a retracted position when the cutting machine is connected to the motor vehicle (2).

22. Cutting machine according to Claim 21 and Claim 9 or 14, ***characterized in*** that the remote control (69) is connected to the setting-down element (55) in such a way that bringing the setting-down element (55) into the set down position causes the tap (98; 101) to open or respectively switches the distributer (86) into its second position (B).

23. Cutting machine according to any one of Claims 1 to 22, ***characterized in*** that the body (81; 81C; 81D) of the cylinder (80; 80B; 80C; 80D) is connected to the hitching structure (4) by means of a connection (63).

24. Cutting machine according to Claim 23, ***characterized in*** that the said connection (63) is of the pivot type with its axis at least substantially parallel to the axis (11') of the first articulation (11).

25. Cutting machine according to any one of Claims 1 to 24, ***characterized in*** that a means (79, 94, 95, 96) is provided for reactivating the control device (60; 60A; 60B; 60C; 60D).

26. Cutting machine according to Claim *25, characterized in* that the said reactivation means (79, 94, 95, 96) automatically reactivates the control device (60; 60A; 60B; 60C; 60D) when the said cutting machine is moved from the set down position into the transport position.

27. Cutting machine according to Claim 25 or 26, ***characterized in*** that the said reactivation means (79, 94, 95, 96) comprises, at the connection between the draw-spring(s) (59) to the cutting mechanism (6), a slide (79) capable of sliding at least substantially parallel to the longitudinal axis of the drawspring(s) (59) and fitted with a first stop (95) intended to limit the deployment of the slide (79), and with a second (end) stop (96) intended to limit the retraction of the said slide (79).

28. Cutting machine according to any one of Claims 1 to 27, ***characterized in*** that a means (79, 94, 95, 96) is provided for adjusting the amount of lightening afforded by the draw-spring(s) (59).

29. Cutting machine according to Claim 28, ***characterized in*** that the said means for adjusting the amount of lightening (79, 94, 95, 96) comprises, at the connection between the draw-spring(s) (59) and the cutting mechanism (6), a slide (79) capable of sliding at least substantially parallel to the longitudinal axis of the draw-spring(s) (59) and fitted with a first stop (95) intended to limit the deployment of the slide (79), and with an adjustable second stop (96) intended to limit the extent to which the said slide (79) can be retracted.
